# EUROPEAN PATENT APPLICATION

(11) **EP 1 940 110 A1**
(43) Date of publication of application: **02.07.2008**
(21) Application number: 07122788.8
(22) Date of filing: 10.12.2007
(51) Int. Cl.: H04L 29/06

(54) **Stream recording method, apparatus and system**

(30) Priority: 29.12.2006 KR 20060138771
(71) Applicant: SAMSUNG ELECTRONICS CO., LTD., Suwon-si, Gyeonggi-do (KR)
(72) Inventor: Lee, Jae-hwang, Seoul (KR); Shim, Hyo-sun, Bundang-gu, Seongnam-si, Gyeonggi-do (KR)
(74) Representative: Robinson, Ian Michael

(57) **Abstract**

A stream recording method, apparatus, and system. When a packet loss is detected in packets constituting a stream while the stream transmitted from a server (100) is recorded, the lost packet is retransmitted so as to be inserted into a specific portion of the recorded stream. Therefore, it is possible to reduce inconvenience and a waste of time required for downloading the whole stream to be recorded when the packet loss occurs during recording as well as to decrease a network load.

## Description

### BACKGROUND OF THE INVENTION

### 1. Field of the Invention

Aspects of the present invention relate to a method and apparatus for recording a stream.

### 2. Description of the Related Art

The recent advancement of network techniques is creating a significant increase in a network bandwidth. In addition, as the use of mobile terminals is becoming wide spread, high speed communication can be used anytime, anywhere, including at businesses, schools, and homes. Such an enhanced network environment promotes services for providing multimedia content (e.g., audio, video, etc). As a result, there is a growing demand for multimedia services.

However, multimedia data with a large size is less effectively reproduced than text or image data when the data is reproduced after the entire amount of the data is received. For this reason, multimedia data is generally transmitted and received between a server and a mobile terminal using a streaming scheme rather than a downloading scheme. In the downloading scheme, the mobile terminal cannot reproduce data until the data is completely transmitted from the server to the mobile terminal. In the streaming scheme, the data can be reproduced while the mobile terminal receives the data. The streaming scheme generally uses a protocol called a real time transport protocol (RTP) defined in RFC 1889 of the International Engineering Task Force (IETF).

Furthermore, in the streaming scheme, when a user directly live-casts multimedia content or when real time content is received, such as real time broadcasting content (e.g., Internet protocol television (IPTV)), the content is required to be recorded. However, since the RTP protocol is a UDT (UDP based Data Transfer protocol) protocol, quality of service (QoS) is not ensured. Not to mention, when a wireless mobile terminal is used, handoff or interference may cause a packet loss, and thus data may contain a skipped portion during recording. When the packet loss occurs during recording, the mobile terminal has to stop recording or restart recording from the beginning.

### SUMMARY OF THE INVENTION

According to the present invention there is provided a method, an apparatus and a system as set forth in the appended claims. Other features of the invention will be apparent from the dependent claims, and the description which follows.

Aspects of the present invention provide a method, apparatus, and system in which, when a packet loss is detected in packets constituting a stream while the stream transmitted from a server is recorded, the lost packet is retransmitted so as to be inserted into a specific portion of the recorded stream, and thus can reduce inconvenience and a waste of time required for downloading the whole stream to be recorded when the packet loss occurs during recording and also can reduce network load.

According to an aspect of the present invention, a method of recording a stream transmitted from a server using an RTP protocol (real time transport protocol) protocol is provided. The method comprises recording the transmitted stream; detecting a packet loss of packets constituting the recorded stream; and requesting the server to retransmit a lost packet using an RTP control protocol (RTCP) packet if the packet loss is detected.

According to another aspect of the present invention, a computer-readable medium is provided. The computer-readable medium has embodied thereon a computer program to execute the above method of recording a stream.

According to another aspect of the present invention, an apparatus to record a stream transmitted from a server using an RTP protocol (real time transport protocol) is provided. The apparatus comprises a stream recorder to record the stream transmitted from the server by using the RTP protocol; a packet loss detector to detect a packet loss of packets constituting the recorded stream; and a retransmission requestor to request the server to retransmit a lost packet if the packet loss is detected, wherein an RTCP (RTP control protocol) packet is used when the lost packet is requested to be retransmitted.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram of a stream recording system according to an embodiment of the present invention;
FIG. 2 illustrates an example of a real time transport protocol (RTP) packet according to an embodiment of the present invention;
FIG. 3 illustrates an example of a stream recorded in the unit of RTP packet according to an embodiment of the present invention;
FIG. 4 illustrates an example of an RTP control protocol (RTCP) packet according to an embodiment of the present invention;
FIG. 5 is a flowchart of a method of recording a stream according to an embodiment of the present invention; and
FIG. 6 is a flowchart of a method of recording a stream according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

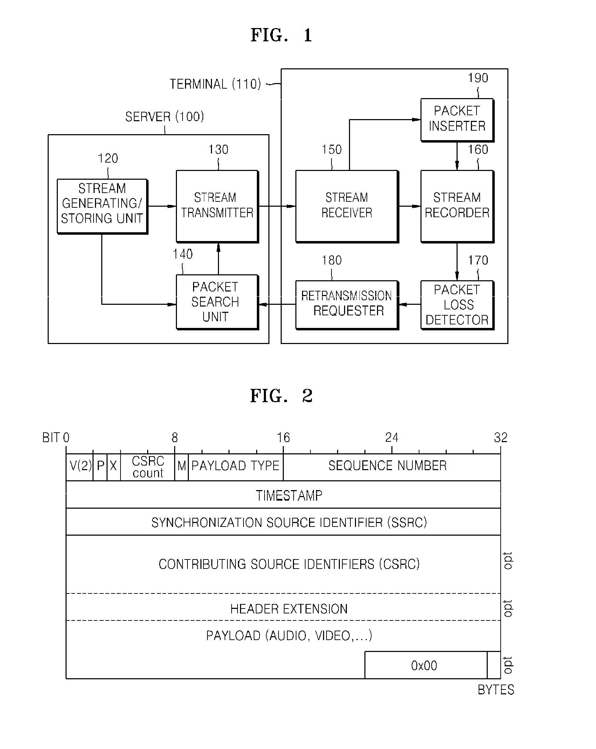

FIG. 1 is a block diagram of a stream recording system according to an embodiment of the present invention. The stream recording system includes a server 100 and a terminal 110. The terminal 110 is equivalent to the stream recording system, but the term "terminal" is used here for convenience. The terminal may include laptop computers, mobile phones, personal digital assistants, personal entertainment devices, or other mobile devices.

A stream and a packet will be described first in brief. A series of consecutive packets is called a stream. The stream is video data and/or audio data transmitted from the server 100 to the terminal 110 through a network. The server 100 splits the video data or the audio data into a specific data unit so as to transmit the data through the network. The server 100 creates real time transport protocol (RTP) packets by appending an RTP header to the split data, and transmits the packets to the terminal 110. The terminal 110 collects the transmitted RPT packets, restores their original forms, and reproduces the restored RTP packets. In this case, the packets are simultaneously received and reproduced.

The server 100 includes a stream generating/storing unit 120, a stream transmitter 130, and a packet search unit 140. The stream generating/storing unit 120 packetizes stored audio/video content or live content using the RTP protocol and generates RTP packets. The stream generating/storing unit 120 stores the generated RTP packets, that is, an RTP stream. As shown in FIG. 2, a sequence number based on a packet order is allocated to a header of an RTP packet. When packets are delivered to the terminal 110 in the wrong order, the packets are re-arranged in real time according to their sequence numbers. When packet loss occurs, it is possible to detect a lost packet.

The stream transmitter 130 transmits to the terminal 110 RPT packets of requested content in a streaming manner. The RTP packets may be transmitted in the form of an audio stream or a video stream. The stream transmitter 130 transmits to the terminal 110 a lost RTP packet found by the packet search unit 140. The stream transmitter 130 transmits to the terminal 110 an RTP control protocol (RTCP) packet including a content name that specifies the requested content.

When the RTCP packet requesting retransmission of a specific packet is received from the terminal 110, the packet search unit 140 refers to the content name and the sequence number included in the received RTCP packet and searches for a packet to be retransmitted among the packets stored in the stream generating/storing unit 120. The found packet is provided to the stream transmitter 130.

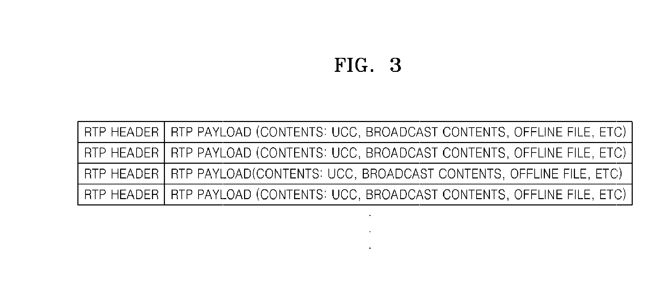

The terminal 110 includes a stream receiver 150, a stream recorder 160, a packet loss detector 170, a retransmission requester 180, and a packet inserter 190. The stream receiver 150 receives the RTP packets from the server 100. As shown in FIG. 3, the stream recorder 160 (see FIG. 1) records a stream received by the stream receiver 150 (see FIG. 1).

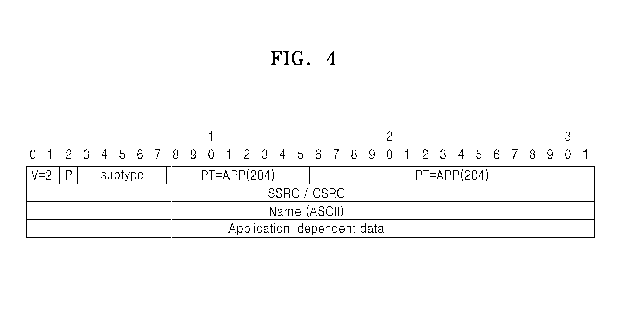

The packet loss detector 170 refers to the sequence numbers of the received RTP packets so as to determine whether a packet loss occurs while the stream is recorded. If the packet loss detector 170 detects the packet loss, the retransmission requester 180 transmits the RTCP packet to the server 100 so as to request retransmission of the lost RTP packet. In this case, as shown in FIG. 4, the content name of the lost RTP packet is recorded in a name (ASCII) field, and the sequence number of the lost RTP packet is recorded in an application-dependent data field. When the RTP packets are received from the server 100, the packet inserter 190 refers to the sequence number of the retransmitted RTP packet and then inserts the retransmitted packet into the recorded RTP packets according to its sequence number. As a result of the insertion, the recorded stream does not contain a skipped portion.

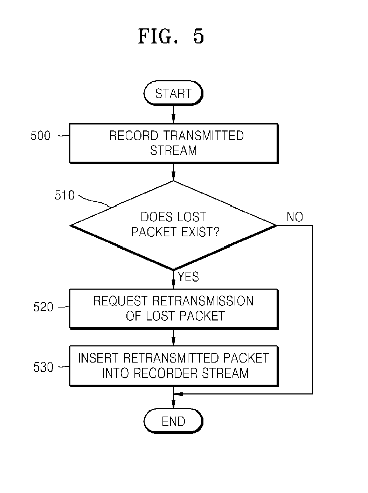

FIG. 5 is a flowchart of a routine of recording a stream according to an embodiment of the present invention. A stream transmitted from the server 100 is recorded (operation 500). RTP packets constituting the transmitted stream are recorded according to their sequence numbers. Loss of the RTP packets are detected (operation 510). In operation 510, a packet loss is detected in such a manner that the sequence numbers of the RTP packets are referred to check if there is a skipped sequence number. If a lost packet is detected at operation 510, an RTCP packet is used to request the server 100 to retransmit the lost packet (operation 520). The lost packet is retransmitted from the server 100, and is then inserted into the stream recorded in operation 500 (operation 530).

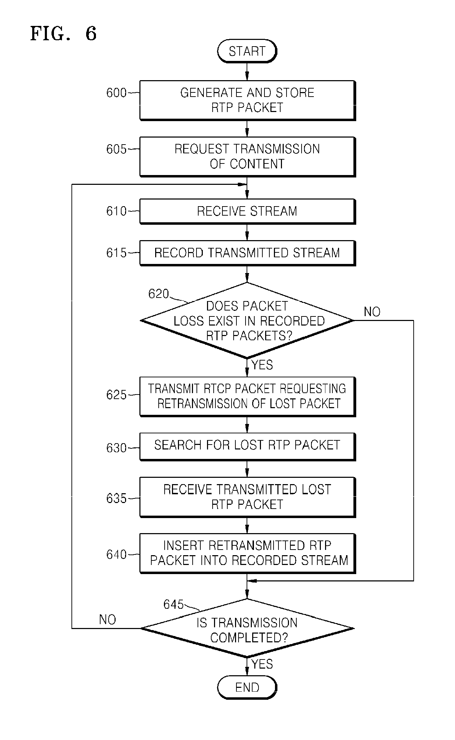

FIG. 6 is a flowchart of a routine of recording a stream according to another embodiment of the present invention. Using the RTP protocol, the server 100 generates RTP packets by packetizing audio/video content, then stores the generated RTP packets (operation 600). The audio/video content may be real time live content or stored content. When the user requests the terminal 110 to record specific content, the terminal 110 requests the server 100 to transmit the specific content requested by the user (operation 605).

When the server 100 is requested to transmit the content, the server 100 transmits the requested RTP packets (i.e., audio/video stream) from the stored RTP packets to the terminal 110, and then the terminal 110 receives the RTP packets (operation 610). By transmitting an RTCP packet, which includes a content name and thus can specify the content to be transmitted, together with the RTP packets, the server 100 may inform the terminal 110 of the content name of the transmitted RTP packets.

When the RTP packets are transmitted to the terminal 110, the terminal 110 refers to the sequence numbers of the transmitted RTP packets and then records the RTP packets (operation 615). The terminal 110 may collect the transmitted RTP packets to restore original content and then may reproduce the original content.

During recording, the terminal 110 refers to the sequence numbers to determine packet loss in the RTP packets being recorded (operation 620). If no packet loss is detected, the terminal 110 determines if transmission is completed (operation 645). If packet loss is detected in operation 620, the terminal 110 transmits an RTCP packet to the server 100 to request retransmission of the lost RTP packet (operation 625). The RTCP packet includes a content name and sequence number of the lost RTP packet.

On receiving the RTCP packet requesting retransmission, the server 100 refers to the content name and sequence number included in the RTPC packet and searches for the RTP packet requested to be retransmitted (i.e., the RTP packet that is lost in transmission) (operation 630). After searching for the lost RTP packet, the server 100 transmits the found RTP packet to the terminal 110, and then the terminal 110 receives the retransmitted RTP packet (operation 635).

The terminal 110 refers to the sequence number of the retransmitted RTP packet and then inserts the retransmitted RTP packet into the recorded RTP packets (i.e., recorded stream) according to the sequence number of the retransmitted RTP packet (operation 640). It is determined whether transmission of the content requested by the user is completed (operation 645). If transmission is not completed, the procedure returns to operation 610, and thus the terminal 110 continuously receives the RTP packets from the server 100.

According to aspects of the present invention, when a packet loss is detected in packets constituting a stream while the stream transmitted from a server is recorded, the lost packet is retransmitted so as to be inserted into a specific portion of the recorded stream. Therefore, it is possible to reduce inconvenience of receiving the whole stream to be recorded when the packet loss occurs during recording. In addition, since there is no need for receiving the whole stream, a network load can be reduced.

Packet recovery and stream recording techniques according to aspects of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CDs and DVDs; magneto-optical media such as optical disks; and hardware devices that are specially configured to store and perform program instructions, such as read-only memory (ROM), random access memory (RAM), flash memory, and the like; and a computer data signal embodied in a carrier wave comprising a compression source code segment and an encryption source code segment (such as data transmission through the Internet). The computer readable recording medium can also be distributed over network coupled computer systems so that the computer readable code is stored and executed in a distributed fashion. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording a stream transmitted from a server (100) using a real time transport protocol (RTP), the method comprising:
recording the transmitted stream;
detecting a packet loss of packets constituting the recorded stream; and
requesting the server (100) to retransmit a lost packet using an RTP control protocol (RTCP) packet if the packet loss is detected.

2. The method of claim 1, wherein:
detecting the packet loss comprises referring to sequence numbers of the packets so as to detect the packet loss; and
the RTCP packet includes a sequence number of the lost packet.

3. The method of claim 2, further comprising:
if the server (100) is requested to retransmit the lost packet, searching for an RTP packet to be retransmitted by referring to the sequence number of the RTCP packet, and retransmitting the found RTP packet.

4. The method of claim 3, further comprising:
inserting the RTP packet retransmitted from the server (100) into the recorded stream.

5. A computer-readable medium having embodied thereon a computer program to execute the method of any of claims 1 to 4.

6. An apparatus to record a stream transmitted from a server (100) using a real time transport protocol (RTP), comprising:
a stream recorder (160) to record the stream transmitted from the server (100) using the RTP protocol;
a packet loss detector (170) to detect a packet loss of packets constituting the recorded stream; and
a retransmission requestor (180) to request the server (100) to retransmit a lost packet if the packet loss is detected,
wherein an RTCP (RTP control protocol) packet is used when the lost packet is requested to be retransmitted.

7. The apparatus of claim 6, wherein:
the packet loss detector (170) refers to sequence numbers of the packets to detect the packet loss; and
the RTCP packet includes a sequence number of the lost packet.

8. The apparatus of claim 7, wherein the server (100) comprises:
a packet search unit (140) to search for an RTP packet to be retransmitted by referring to the sequence number of the RTCP packet; and
a packet transmitter (130) to retransmit the found RTP packet.

9. The apparatus of claim 7, further comprising
a packet inserter (190) to insert the RTP packet retransmitted from the server (100) into the recorded stream.

10. A streaming server (100) to stream data to clients (110) and to recover lost packets, the server (100) comprising:
a stream generating unit (120) to divide content to be transmitted into a plurality of real-time transport protocol (RTP) packets, to allocate a sequence number to each of the plurality of RTP packets, and to store the plurality of RTP packets allocated sequence numbers;
a stream transmitting unit (130) to transmit the RTP packets comprising an RTP stream to a plurality of clients (110); and
a packet search unit (140) to receive a request for retransmission of an RTP packet from one of the clients (110) and to retransmit the requested RTP packet to the one of the clients (110).

11. The server (100) of claim 10, wherein the request for retransmission of the RTP packet is an RTP control protocol (RTCP) packet including an identifier identifying the content and a sequence number identifying the packet to be retransmitted.

12. The server (100) of claim 11, wherein the packet search unit (140) refers to the content name and sequence number included in the RTCP packet, retrieves an RTP packet stored by the stream generating unit (120) that corresponds to the content name and sequence number, and retransmits the retrieved RTP packet to the client (110).

13. The server (100) of claim 10, 11 or 12, wherein the stream generating unit (120) comprises a storage unit to store the plurality of RTP packets.

14. A method of managing a content stream to minimize packet loss and interruption of the stream, the method comprising:
generating a plurality of real-time transport protocol (RTP) packets from content to create a stream;
transmitting the stream to a plurality of clients (110);
receiving a request to retransmit one of the plurality of RTP packets from one of the clients (110); and
retransmitting the requested RTP packet to the one of the plurality of clients (110).

15. The method according to claim 14, wherein the generating of the plurality of RTP packets comprises allocating a sequence number to each of the RTP packets.

16. The method according to claim 15, wherein:
the receiving of the request to retransmit one of the plurality of RTP packets comprises receiving an RTP control protocol (RTCP) packet including a sequence number corresponding to the requested RTP packet; and
the retransmitting of the RTP packet comprises retransmitting the RTP packet corresponding to the sequence number in the RTCP packet.

17. The method according to claim 14, further comprising:
storing the plurality of RTP packets in a storage unit;
wherein the retransmitting of the requested RTP packet comprises retrieving the requested RTP packet from the storage unit.

18. The method according to claim 16, wherein the RTCP packet further includes a content identifier identifying the content to which the requested RTP packet is related.

19. A computer readable medium comprising instructions that, when executed by a computer, cause the computer to perform the method of any of claims 14 to 18.

20. A method of mitigating packet loss in real-time streaming, the method comprising:
detecting a lost packet in a packet stream;
requesting a server (100) for retransmission of the lost packet using an RTCP (RTP control protocol) packet;
receiving a retransmission of the lost packet; and
reinserting the retransmitted packet into the packet stream.
